# EUROPÄISCHE PATENTSCHRIFT

(11) **EP 3 410 069 B1**
(45) Veröffentlichungstag und Bekanntmachung des Hinweises auf die Patenterteilung: **05.08.2020**
(21) Anmeldenummer: 18172014.5
(22) Anmeldetag: 14.05.2018
(51) Int. Cl.: G01C 21/34, G01C 21/36

(54) **VERFAHREN ZUM UNTERSTÜTZEN EINES BENUTZERS EINES KRAFTFAHRZEUGS BEI EINER FAHRT MIT DEM KRAFTFAHRZEUG, NAVIGATIONSEINRICHTUNG UND KRAFTFAHRZEUG**
MOTOR VEHICLE, NAVIGATION DEVICE AND METHOD FOR ASSISTING A USER OF A MOTOR VEHICLE WHILST DRIVING THE MOTOR VEHICLE
PROCÉDÉ D'AIDE À UN UTILISATEUR D'UN VÉHICULE AUTOMOBILE LORS D'UNE CONDUITE D'UN VÉHICULE AUTOMOBILE, DISPOSITIF DE NAVIGATION ET VÉHICULE AUTOMOBILE

(30) Priorität: 29.05.2017 DE 102017208931
(43) Veröffentlichungstag der Anmeldung: 05.12.2018
(73) Patentinhaber: VOLKSWAGEN AKTIENGESELLSCHAFT, 38440 Wolfsburg (DE)
(72) Erfinder: BADER, Viktor, 38448 Wolfsburg (DE)

(56) Entgegenhaltungen:
- EP-A2- 3 396 321
- WO-A1-2014/162572
- JP-A- 2012 233 725
- US-A1- 2016 349 068

## Beschreibung

Die Erfindung betrifft ein Verfahren zum Unterstützen eines Benutzers eines Kraftfahrzeugs bei einer Fahrt mit dem Kraftfahrzeug. Das erfindungsgemäße Verfahren wird mittels einer Navigationseinrichtung durchgeführt, d.h. mit einem Gerät oder einer Gerätekomponente, das oder die zum Auswerten von Position-und Navigationssignalen, zum Ermitteln von Reiserouten und zum Erzeugen von Signalen eingerichtet ist. Die Navigationseinrichtung kann dabei beispielsweise als Navigationsgerät ausgestaltet sein.

Navigationsgeräte und Navigationssysteme bieten in Kraftfahrzeugen eine bequeme Möglichkeit, sich per Kartenmaterial an ein bestimmtes Reiseziel, gegebenenfalls über vorgegebene Zwischenziele, führen zu lassen. Häufig tritt jedoch Szenario auf, bei dem eine vorgegebene Fahrtroute, zum Beispiel an einer Ausfahrt einer Autobahn, vom Fahrer bewusst verlassen wird, um zum Beispiel einen Autohof an zu fahren (im Gegensatz zum Ausscheren zu einer Autobahn-Raststätte oder einem Autobahnparkplatz).

Wird die vom Navigationssystem vorgegebene Fahrtroute verlassen, so will das Navigationsgerät den Fahrer wieder auf diese zurückführen, d.h. zurück auf die beispielhafte Autobahn. Der Fahrer sollte vor oder nach der Ausfahrt während der Fahrt das neue Zwischenziel mit dem Autohof nicht händisch nachpflegen und seine Hände am Lenkrad lassen.

Die DE 100 59 746 A1 beschreibt ein Verfahren zur computerunterstützten Reiseroutenplanung und Reiseroutenführung, das dynamische Veränderungen sowohl der Verkehrssituation als auch Änderung von Terminen berücksichtigt. Die oben beschriebene Problematik, dass der Fahrer während des Fahrens mit einer Situation konfrontiert ist, das Navigationssystem neu einstellen zu müssen, wird dabei in dieser Druckschrift jedoch nicht tangiert oder diskutiert.

Aus der DE 10 2014 016 837 A1 ist ein System zum Vorschlagen einer Route für ein Kraftfahrzeug bekannt, wobei ein Reiseziel in Abhängigkeit von einem Verhalten eines Insassen vorgegeben wird. In der beispielhaften Situation, in der der Fahrer nicht eine teurere Tankstelle an der Autobahn-Raststätte anfahren möchte, sondern einen günstigeren, abseits liegenden Autohof, müsste der Fahrer jedoch durch sein Verhalten zu erkennen geben, dass er den Autohof bevorzugt. Ein solcher Fahrerwunsch erscheint mit dem Verfahren der DE 10 2014 016 837 A1 also weniger zielführend umsetzbar.

Schließlich beschreibt die DE 10 2012 212 065 A1 ein Fahrerassistenzsystem mit einem Stauassistenten, wobei ein Fahrtziel in Abhängigkeit von einer zeitlichen Dauer eines Staus und mögliche Ausfahrten und/oder Parkplätze berücksichtigt werden. Diese Druckschrift ist nicht an die oben beschriebene Problematik adressiert.

Die DE 10 2007 059 761 A1 betrifft ein Verfahren zur Routenplanung und Zielführung für Lkw-Fahrer, bei welchem eine Fahrtroute von einem Ausgangsort zu einem Zielort derart berechnet und ausgegeben wird, dass nach einer vorgegebenen Fahrzeit eine Unterbrechung einer Fahrt eingeplant wird, wobei zu einem Zeitpunkt und/oder einer Zeitdauer der Unterbrechung auf der Fahrtroute befindliche Parkplätze als Zwischenziel und/oder Zielort in die Ermittlung der Fahrtroute einbezogen werden. Dabei wird eine Auslastung der Parkplätze bei der Ermittlung der Fahrroute als Eingangsinformation berücksichtigt. Bei der DE 10 2007 059 761 A bringt jedoch keine Flexibilität Bezug auf frei bestimmbare Zwischenziele, beispielsweise den oben genannten Autohof.

Die WO 2014/162572 A1 beschreibt ein Routen-Einstellungsgerät mit einer Konfiguration umfassend eine Routen-Einstellungseinheit und eine Ausgabeeinheit.

Die JP 2012/233725 A beschreibt einen Informations-Prozessor umfassend: Erfassungsmittel zum Erfassen von einer Reise-Vorgeschichte von einer Mehrzahl von Informations-Prozessoren.

Die US 2016/0349068 A1 beschreibt Systeme und Verfahren, um auf eine Absicht eines Benutzers zu schließen, an einem vordefinierten Ort oder Haltepunkt entlang einer vorbestimmten Route, beispielsweise einer Ausfahrt entlang einer Autobahn, anzuhalten und Benutzern zu ermöglichen, sich an Systeme zu melden, die Ausstiegs- oder Haltepunkt-POI-Daten beibehalten.

Die EP 3 396 321 A2, Stand der Technik gemäß Art. 54 (3) EPÜ, offenbart die Auswahl eines Zwischenziels bei Abweichung von einer geplanten Route in Abhängigkeit eines Tankfüllstandes.

Eine der Erfindung zugrunde liegende Aufgabe ist das Bereitstellen einer Routenplanung mit einer verbesserten Flexibilität in Bezug auf frei bestimmbare Zwischenziele bei der Fahrt. Die gestellte Aufgabe wird gelöst durch das erfindungsgemäße Verfahren und die erfindungsgemäßen Vorrichtungen gemäß den nebengeordneten Patentansprüchen. Vorteilhafte Weiterbildungen sind durch die Unteransprüche gegeben.

Die Erfindung basiert auf der Idee, bei einer Änderung der tatsächlich befahrenen Fahrtroute gegenüber der vorgeschlagenen Fahrtroute des Navigationssystems ein neues Zwischenziel in der Nähe der momentanen Fahrzeugposition zu bestimmen und eine alternative Reiseroute bereitzustellen, die das Zwischenziel berücksichtigt, wobei die alternative Reiseroute jedoch als Reiseziel das ursprüngliche Reiseziel hat.

Das erfindungsgemäße Verfahren zum Unterstützen eines Benutzers eines Kraftfahrzeugs bei einer Fahrt mit dem Kraftfahrzeug weist die folgenden, durch eine Navigationseinrichtung durchgeführten Schritte auf, wobei die Navigationseinrichtung beispielsweise als Navigationsgerät oder Navigationssystem ausgestaltet sein kann.

Es erfolgt ein Bereitstellen einer Reiseroute, die eine Reise von einem Startpunkt zu einem Reiseziel beschreibt, ein Feststellen einer tatsächlichen, durch das kraftfahrzeugbefahrenen Fahrtroute, beispielsweise durch Erfassen einer Fahrbewegung des Kraftfahrzeugs, und, anhand der erfassten Fahrbewegung, ein Ermitteln der tatsächlichen, durch das kraftfahrzeugbefahrenen Fahrtroute.

Das erfindungsgemäße Verfahren ist gekennzeichnet durch die folgenden, durch die Navigationseinrichtung durchgeführten Schritte. Es erfolgt ein Vergleichen der festgestellten, tatsächlichen Fahrtroute mit der bereitgestellten Reiseroute, und, falls der Vergleich ergibt, dass die tatsächliche, durch das Kraftfahrzeug befahrene Fahrtroute ein Abweichkriterium erfüllt, erfolgt ein Feststellen, dass das Kraftfahrzeug die bereitgestellte Route verlassen hat. Mit anderen Worten erfolgt anhand der ermittelten, tatsächlichen Fahrtroute ein Prüfen, ob das Kraftfahrzeug die bereitgestellte Reiseroute verlassen hat, und falls dieser Prüfvorgang ergibt, dass die tatsächlich befahrene Fahrtroute ein Abweichkriterium erfüllt, erfolgt das Feststellen, dass das Kraftfahrzeug bereitgestellte Reiseroute verlassen hat. Dies bringt den Vorteil, dass durch das Abweichkriterium gewisse Toleranzen miteinbezogen werden können. Ist auf der Navigationseinrichtung beispielsweise kein aktuelles Kartenmaterial abgelegt und befindet sich das Kraftfahrzeug gerade in einem Baustellenbereich, wo eine Straßenführung der ehemals gerade verlaufenden Straße in einen Kreisverkehr geändert wurde, kann eine geringfügige Abweichung von der Fahrbahn des Kreisverkehrs zu dem ehemals geraden Straßenstück noch toleriert werden.

Es erfolgt ein Vorgeben einer Kategorie in Abhängigkeit von einem durch eine Sensoreinrichtung des Kraftfahrzeugs erfassten Verkehrszeichen. In Abhängigkeit von dem festgestellten Verlassen der bereitgestellten Reiseroute erfolgt ein Ermitteln eines punkthaften Geoobjekts der vorgegebenen Kategorie an Geoobjekten, ein Vorgeben des ermittelten Geoobjekts als Geoobjekt mit einem benutzerspezifischen Interesse oder mit einer benutzerspezifischen Relevanz, und, in Abhängigkeit von dem vorgegebenen Geoobjekt, ein Ändern der ermittelten Reiseroute in eine Alternativroute zu dem Reiseziel mit dem vorgegebenen Geoobjekt als Zwischenziel.

Als Geoobjekt wird dabei ein tatsächlich vorhandenes Objekt verstanden, das mittels Geodaten eindeutig referenzierbar ist. Ein punkthaftes Geoobjekt kann auch als sogenannter "Point of interest" bezeichnet werden und beispielsweise eine Tankstelle, ein Restaurant oder ein Geschäft oder eine Sehenswürdigkeit beschreiben. Die Kategorie der Geoobjekte ist in diesem Zusammenhang ein thematischer Kontext einer Dienstleistung oder eines Produktes, die oder das an dem Geoobjekt bereitgestellt wird, oder ein thematischer Kontext einer Information zu einem Betreiber des Geoobjekts. Beispielsweise können also Tankstellen in der Nähe ermittelt werden, und/oder alle Restaurants.

Es werden die oben genannten Nachteile teilweise oder vollständig behoben. Das Zwischenziel wird, ohne das eigentliche Reiseziels den Augen zu verlieren, von der Navigationseinrichtung generiert und angefahren. Der Fahrer des Kraftfahrzeugs oder ein anderer Insasse müssen dies während der Fahrt nicht mehr aktiv einstellen oder vorgeben. Hierdurch ergibt sich auch eine erhöhte Fahrsicherheit, weil der Fahrer erst gar nicht in eine Situation gebracht wird, in der er umständlich das beispielhafte Navigationsgerät neu einstellen muss. Das erfindungsgemäße Verfahren erhöht eine Flexibilität bei frei bestimmbaren Zwischenzielen.

Vorzugsweise kann das Abweichkriterium beschreiben: a) ein Überschreiten eines vorgegebenen Schwellenwerts eines Grades einer Abweichung zwischen der tatsächlichen Fahrtroute und der bereitgestellten Reiseroute; und/oder ein Feststellen eines durch das Kraftfahrzeug aktuell durchgeführten Fahrmanövers, vorzugsweise ein außerplanmäßiges Abbiegemanöver und/oder ein Verlassen einer Autobahn und/oder ein Feststellen, dass sich das Kraftfahrzeug auf einer Straßenausfahrt abseits der ermittelten Reiseroute befindet. So kann die Navigationseinrichtung beispielsweise ein Positionssignal auswerten, beispielsweise ein GPS-Signal, das die aktuelle Position des Kraftfahrzeugs beschreiben kann und das mit den Koordinaten der ermittelten Reiseroute verglichen werden kann. Ein Abbiegemanöver kann die Navigationseinrichtung beispielsweise durch Auswerten eines Signals eines Drehwinkelgebers am Lenkrad des Kraftfahrzeugs durchführen. Denkbar ist auch, dass beispielsweise ein Abstand der aktuellen Position des Kraftfahrzeugs zu der Reiseroute ermittelt werden kann. Ein solches Abweichkriterium ermöglicht das Durchführen des erfindungsgemäßen Verfahrens mithilfe von zum Beispiel Sensorsignalen von Sensoren, die im Kraftfahrzeug bereits vorhanden sind.

Gemäß einem weiteren, besonders bevorzugten Ausführungsbeispiel des erfindungsgemäßen Verfahrens kann das Vorgeben des Geoobjekts und/oder ein Vorgeben der Kategorie gezielt beeinflusst werden umso besser auf die spezifischen, aktuellen Wünsche des Fahrers einzugehen. Das Vorgeben des Geoobjekts als Geoobjekt mit dem benutzerspezifischen Interesse kann erfolgen in Abhängigkeit von: einem Standort des ermittelten Geoobjekts in einem vorbestimmten Umkreis um eine aktuelle Position des Kraftfahrzeugs, und/oder einem Bediensignal aus einer Bedieneinrichtung, wobei das Bediensignal eine benutzerspezifische Auswahl des ermittelten Geoobjekts beschreibt, und/oder dem durch eine Sensoreinrichtung des Kraftfahrzeugs und/oder durch die Navigationseinrichtung erfassten Verkehrszeichen, und/oder einer in einem Benutzerprofil hinterlegten benutzerspezifischen Präferenz.

Der Umkreis kann beispielsweise als Standardeinstellung der Navigationseinrichtung bestimmt sein. Als Bedieneinrichtung wird ein Gerät oder eine Gerätekomponente zum Empfangen und Erfassen von Bedienhandlungen angesehen, wobei das Bediensignal in Abhängigkeit von der empfangenen und erfassten Bedienhandlung erfolgt und die Bedienhandlung und/oder durch die Bedienhandlung auszulösende Funktion beschreiben kann. Im Fall des oben genannten Beispiels beschreibt das Bediensignal eine benutzerspezifische Auswahl des ermittelten Geoobjekts, beispielsweise falls die Navigationseinrichtung mehrere Geoobjekte der gleichen Kategorie und/oder unterschiedliche Kategorien ermittelt hat, ein entsprechendes Ausgabesignal erzeugt und zum Beispiel an einen Bildschirm überträgt, sodass also beispielsweise ein Anzeigefeld mit einem Piktogramm für eine Tankstelle und ein Anzeigefeld dem Piktogramm für ein Restaurant durch den beispielhaften Bildschirm ausgegeben werden, und der Benutzer beispielsweise durch Berühren desjenigen Anzeigefelds, dessen angezeigtes Geoobjekt er gerne als Zwischenziel anfahren würde, berührt. Zur Erfassung von Verkehrszeichen kann die Sensoreinrichtung verwendet werden, also ein Gerät oder eine Gerätekomponente mit einem entsprechend ausgestalteten Sensor. Die in dem Benutzerprofil hinterlegten benutzerspezifische Präferenzen können beispielsweise bevorzugte Betreiber der Tankstellen oder zum Beispiel eine Information darüber sein, dass zwischen 18 und 20 Uhr diejenigen ermittelten Geoobjekte von besonderem Interesse sein können, die Lebensmittel oder Mahlzeiten anbieten.

Zusätzlich kann das Vorgeben der Kategorie in Abhängigkeit von einem aus einem Kraftfahrzeugsystem des Kraftfahrzeugs empfangenen Wert eines Betriebsparameters des Kraftfahrzeugsystems erfolgen, und/oder von einem aktuellen Tankfüllstand oder einem aus einer Zeitmesseinrichtung empfangen Zeitsignal, wobei das Zeitsignal vorzugsweise einen Zeitpunkt und/oder einen Zeitbereich beschreiben kann, und wobei die Zeitmesseinrichtung ein Gerät oder ein Bauteil mit beispielsweise einer Uhr und/oder einer Stoppuhr ist; und/oder der in dem Benutzerprofil hinterlegten benutzerspezifischen Präferenz.

Das Verkehrszeichen kann dabei beispielsweise ein Hinweis auf eine Sehenswürdigkeit und/oder sanitäre Einrichtungen und/oder eine Tankstelle und/oder auf ein Restaurant sein. Beispielsweise kann eine Kamera des Kraftfahrzeugs das Verkehrszeichen erfassen, und beispielsweise eine Bildverarbeitungssoftware kann zum Erkennen des Hinweises eine Mustererkennung durchführen.

Gemäß einer weiteren Ausführungsform des erfindungsgemäßen Verfahrens kann, in Abhängigkeit von dem festgestellten Verlassen der bereitgestellten Reiseroute, ein Ermitteln eines weiteren, punkthaften Geoobjekts einer anderen als der vorgegebenen Kategorie an Geoobjekten erfolgen. Dies kann gefolgt sein von einem Erzeugen jeweils eines Informationsausgabesignals für jedes der ermittelten Geoobjekte und/oder für jede der Kategorien, einem Übertragen des jeweiligen Informationsausgabesignals an eine Ausgabeeinrichtung des Kraftfahrzeugs zum Ausgeben des jeweiligen Informationsausgabesignals, und ein Empfangen eines Auswahlsignals aus der Bedieneinrichtung, wobei das Auswahlsignal eine benutzerspezifische Auswahl eines der ermittelten Geoobjekte und/oder einer der Kategorien beschreiben kann. Dabei kann das Vorgeben des Geoobjekts als Geoobjekt mit dem benutzerspezifischen Interesse in Abhängigkeit von der durch das Auswahlsignal beschriebenen Auswahl erfolgen. Diese Ausführungsform des erfindungsgemäßen Verfahrens wurde bereits oben angesprochen und anhand der beispielhaften zwei Piktogramme für ein Restaurant und für eine Tankstelle veranschaulicht. Vorteilhafterweise kann durch das Berücksichtigen anderer Kategorien und/oder mehrerer ermittelter Geoobjekte berücksichtigt werden, dass der Fahrer vielleicht die beispielhafte Autobahn aus einem anderen Grund verlassen hat, und nicht zum Beispiel aus in dem Benutzerprofil hinterlegten Gründen.

Als Ausgabeeinrichtung wird ein Gerät oder Gerätekomponente zum Ausgeben von Signalen verstanden, die beispielsweise einen Bildschirm und/oder Lautsprecher umfassen kann. In diesem Beispiel kann das auszugebende Signal ein Bildsignal und/oder Videosignal und/oder Audiosignal sein.

Das erfindungsgemäße Verfahren kann weiterhin verfeinert werden, in dem auch bestimmte Verkehrssituationen mit einer geographischen Ausbreitung einer Beeinträchtigung eines Verkehrsflusses auf der bereitgestellten Route berücksichtigt werden. Gemäß einer weiteren Ausführungsform des erfindungsgemäßen Verfahrens kann die Navigationseinrichtung in Abhängigkeit von dem festgestellten Verlassen der bereitgestellten Reiseroute eine solche Verkehrssituation erfassen. Dabei kann das ermittelte Geoobjekt eine Zusammenführung der bereitgestellten Reiseroute mit einer befahrbaren Infrastruktur sein, beispielsweise einer Autobahnauffahrt, und dabei kann die Alternativroute über die befahrbare Infrastruktur an einer Stelle der Zusammenführung zurück auf die bereitgestellte Reiseroute führen. So kann beispielsweise ein Stau umfahren werden. Dabei kann die Zusammenführung das Geoobjekt darstellen. Das Ändern der bereitgestellten Reiseroute in die Alternativroute kann dabei in Abhängigkeit von der festgestellten geographischen Ausbreitung erfolgen. Befindet sich der Fahrer beispielsweise auf einer Autobahn und kann erkennt selbst, dass er auf ein Stau
zufährt und fährt er deswegen von der Autobahn ab, kann die Navigationseinrichtung des Kraftfahrzeug um diese Verkehrssituation herum und zurück auf die Autobahn und damit auf die ursprünglich bereitgestellte Reiseroute führen.

Gemäß einer weiteren Ausführungsform des erfindungsgemäßen Verfahrens kann die Navigationseinrichtung ein Auswahlsignal aus der Bedieneinrichtung empfangen, das eine Reihenfolge mehrerer vorgegebener Geoobjekte und/oder ein Verwerfen eines vorgegebenen Geoobjekts als mögliches Reiseziel beschreiben kann. Das Ändern der ermittelten Reiseroute in die Alternativroute kann dann in Abhängigkeit von dem empfangenen Auswahlsignal erfolgen. Hierdurch kann der Benutzer des Kraftfahrzeugs Einfluss auf die Alternativroute nehmen und aktuelle Wünsche umsetzen.

Die oben gestellte Aufgabe wird ebenfalls gelöst durch eine Navigationseinrichtung, die eine Prozessoreinrichtung aufweist, wobei als Prozessoreinrichtung ein Gerät oder ein Bauteil zur elektronischen Datenverarbeitung verstanden wird. Die Prozessoreinrichtung ist dazu eingerichtet, bei Ausführen eines in einem Speichermedium gespeicherten Programmcodes ein Verfahren nach einem der vorhergehenden Ansprüche durchzuführen. Es ergeben sich die oben genannten Vorteile. Vorzugsweise kann die Prozessoreinrichtung mindestens einen Mikrokontroller und/oder mindestens einen Mikroprozessor aufweisen.

Die oben gestellte Aufgabe wird, unter Erreichen der bereits genannten Vorteile, ebenfalls gelöst durch die folgenden Vorrichtungen. Dazu gehört ein erfindungsgemäßes Speichermedium mit einem Programmcode, der dazu eingerichtet ist, bei Ausführen durch die Prozessoreinrichtung eines Kraftfahrzeugs eine Ausführungsform des erfindungsgemäßen Verfahrens durchzuführen. Das Speichermedium kann beispielsweise als Speicherkarte oder Festplatte ausgestaltet sein.

Das erfindungsgemäße Kraftfahrzeug ist gekennzeichnet durch eine Ausführungsform der erfindungsgemäßen Navigationseinrichtung und/oder durch eine Ausführungsform des erfindungsgemäßen Speichermediums.

Im Folgenden ist ein Ausführungsbeispiel der Erfindung beschrieben. Hierzu zeigt:
Fig. 1 eine schematische Skizze zu einem ersten Ausführungsbeispiel des erfindungsgemäßen Verfahrens;
Fig. 2A, 2B, 2C jeweils eine schematische Skizze zu einem weiteren Ausführungsbeispiel des erfindungsgemäßen Verfahrens; und
Fig. 3 eine schematische Skizze zu einem ersten Ausführungsbeispiel des erfindungsgemäßen Verfahrens.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

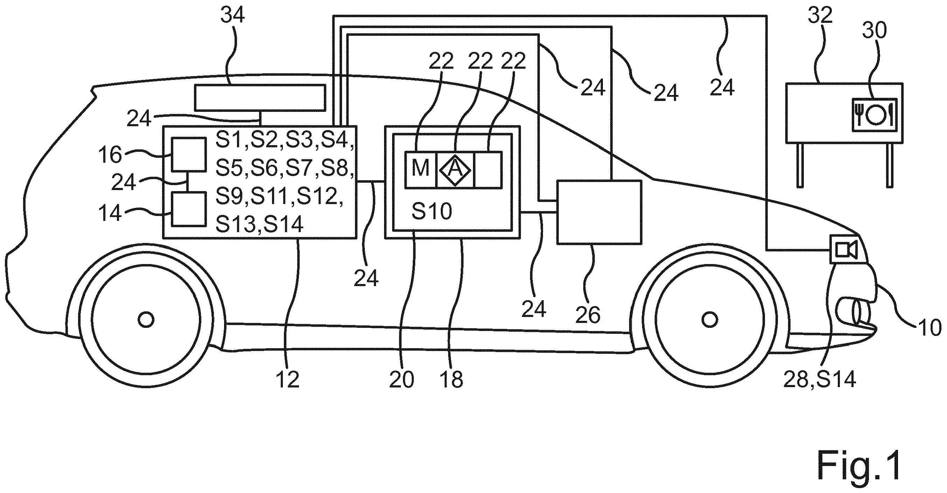

Die Fig. 1 veranschaulicht das Prinzip des erfindungsgemäßen Verfahrens anhand eines Ausführungsbeispiels. Hierzu zeigt die Fig. 1 ein Kraftfahrzeug 10, das beispielsweise als Personenkraftwagen ausgestaltet sein kann.

Das Kraftfahrzeug 10 weist eine Navigationseinrichtung 12 auf, die beispielsweise als Navigationssystem oder Navigationsgerät ausgestaltet sein kann. Vorzugsweise kann die Navigationseinrichtung 12 dabei eine Speichereinrichtung 14 und/oder eine Prozessoreinrichtung 16 aufweisen. Die Speichereinrichtung 14 kann dabei als dem Fachmann bekannter Datenspeicher ausgestaltet sein, beispielsweise als Speicherchip oder als Speicherkarte. Die Speichereinrichtung 14 kann auch als Speichermedium bezeichnet werden. Die Prozessoreinrichtung kann vorzugsweise mindestens einen Mikrokontroller und/oder einen Mikroprozessor umfassen. Die Prozessoreinrichtung 16 kann beispielsweise einen in der Speichereinrichtung 14 gespeicherten Programmcode ausführen, um das erfindungsgemäße Verfahren durchzuführen.

Das Kraftfahrzeug 10 kann optional eine Ausgabeeinrichtung 18 aufweisen, die vorzugsweise einen Bildschirm und/oder einen Lautsprecher aufweisen kann. Im Beispiel der Fig. 1 umfasst die Ausgabeeinrichtung 18 einen Bildschirm, beispielsweise einen berührungssensitiven Bildschirm. In der Fig. 1 ist dabei eine Anzeigefläche 20 gezeigt, auf der beispielhaft drei Anzeigefelder 22 angezeigt werden. Die Ausgabeeinrichtung 18 kann mit der Navigationseinrichtung 12 gekoppelt sein, beispielsweise über eine Datenkommunikationsverbindung 24, die vorzugsweise eine drahtgebundene Datenkommunikationsverbindung 24 sein kann, beispielsweise ein Datenbus des Kraftfahrzeugs 10, zum Beispiel ein CAN-Bus. Alternativ zu der drahtgebunden Ausgestaltung kann die Datenkommunikationsverbindung eine drahtlose Datenkommunikationsverbindung 24 sein, beispielsweise eine Bluetooth- oder WLAN-Verbindung.

Die Ausgabeeinrichtung 18 auf der Anzeigefläche 20 kann beispielsweise auch eine Navigationskarte, die zum Beispiel von der Navigationseinrichtung 12 bereitgestellt werden kann, anzeigen.

Im Falle der Ausgestaltung als berührungssensitiver Bildschirm kann eine Bedieneinrichtung 26 des Kraftfahrzeugs in die Ausgabeeinrichtung 18 integriert sein und dabei beispielsweise eine entsprechende Sensorik zum Erfassen von Berührungen des beispielhaften Bildschirms aufweisen. Zusätzlich oder alternativ kann die Bedieneinrichtung 26 ein Bedienelement aufweisen, das beispielsweise als Tastatur oder Dreh-Drück-Steller ausgestaltet sein kann.

Die Fig. 1 zeigt ebenfalls eine optionale Sensoreinrichtung 28 des Kraftfahrzeugs 10, die beispielsweise eine an einer Kraftfahrzeugfront oder beispielsweise auf einem Kraftfahrzeugdach angebrachte Kamera und ein dem Fachmann aus dem Stand der Technik bekanntes System zum Erfassen und Erkennen von Verkehrszeichen aufweisen, wobei das beispielhafte Verkehrszeichen 32 der Fig. 1 beispielsweise ein Symbol 30 in Form eines Piktogramms eines Restaurants oder einer Raststätte darstellen kann.

Das Kraftfahrzeug kann optional ein Kraftfahrzeugsystem 34 aufweisen, beispielsweise eine Tankvorrichtung oder eine Energiespeichereinrichtung, wobei als Energiespeichereinrichtung ein Gerät oder eine Komponente Speichern von vorzugsweise elektrischer Energie angesehen wird, die zum Beispiel als Traktionsbatterie ausgestaltet sein kann, oder das Kraftfahrzeugsystem 34 kann beispielsweise ein Zeitmesseinrichtung aufweisen, also ein Gerät zum Messen einer Zeit und/oder Vorgeben einer Uhrzeit. Das Kraftfahrzeugsystem 34 kann eine Sensorik aufweisen, um einen Betriebsparameter des Kraftfahrzeugsystems 34 zu erfassen. Dies kann beispielsweise ein Sensor zum Erfassen eines aktuellen Tankfüllstands sein, ein Messgerät zum Messen der aktuellen Zeit oder eines Zeitraumes, oder beispielsweise ein Lademanagement zum Erfassen eines aktuellen Ladezustandes der beispielhaften Energiespeichereinrichtung. Ein entsprechendes, durch das Kraftfahrzeugsystem 34 erzeugtes Betriebsparametersignal kann den genannten Wert des Betriebsparameters beschreiben und durch das Kraftfahrzeugsystem 34 bereitgestellt werden.

Ein Fahrzeugführer des Kraftfahrzeugs 10 kann beispielsweise gerade auf dem Weg von Ingolstadt nach München sein. Er nutzt dabei die Navigationseinrichtung 12 zum Navigieren zu seinem Reiseziel. Die Navigationseinrichtung 12 kann nach einem dem Fachmann aus dem Stand der Technik bekannten Verfahren eine Reiseroute von dem Startpunkt zu dem Reiseziel bereitstellen (Verfahrensschritt S1).

Ein Fahrer des Kraftfahrzeugs 10 kann von der Navigationseinrichtung 12 beispielsweise über eine Autobahn geführt werden. Während der Fahrt des Kraftfahrzeugs 10 kann die Navigationseinrichtung 12 die tatsächlich durch das Kraftfahrzeug 10 befahrene Fahrroute Feststellen (S2), beispielsweise indem eine Fahrbewegung des Kraftfahrzeugs erfasst werden kann. Die Fahrbewegung kann beispielsweise anhand von zum Beispiel aus einem Satelliten empfangenen Positionssignalen, beispielsweise GPS-Signalen, die jeweils die geographischen Koordinaten einer aktuellen Position des Kraftfahrzeugs 10 beschreiben können, ermittelt und es kann dabei also rekonstruiert werden, wo das Kraftfahrzeug 10 tatsächlich entlang fährt. Daraus kann die tatsächliche Fahrtroute abgeleitet werden.

Die Navigationseinrichtung 12 vergleicht die festgestellte, tatsächliche Fahrtroute mit der bereitgestellten Reiseroute (S3), beispielsweise durch Vergleichen von geographischen Koordinaten der Reiseroute und den Koordinaten der tatsächlich befahrenen Fahrtroute. Beispielhaft in der Speichereinrichtung 14 der Navigationseinrichtung 12 kann ein Abweichkriterium abgelegt sein, das die Bedingungen dafür beschreiben kann, ab wann eine Abweichung zwischen der tatsächlichen Fahrtroute und der bereitgestellten Reiseroute darauf zurückschließen lässt, dass das Kraftfahrzeug die bereitgestellte Reiseroute verlassen hat. Ein solches Abweichkriterium kann im Beispiel der Fig. 1 beispielsweise dadurch bereits erfüllt sein, dass die Navigationseinrichtung 12 das außerplanmäßige Abbiegemanöver feststellt (S5) und/oder dass das Kraftfahrzeug 10 die Autobahn bereits verlassen hat.

Alternativ oder zusätzlich kann zum Beispiel vorgesehen sein, dass das Abweichkriterium erfüllt ist, falls sich das Kraftfahrzeug 10 zum Beispiel auf einer Straßenausfahrt oder an einem anderen Standort befindet, der abseits der ermittelten Reiseroute liegt. Hierzu kann beispielsweise ein Schwellenwert einer Distanz zwischen der Reiseroute und dem aktuellen Standort oder der aktuellen Position des Kraftfahrzeugs vorgesehen sein, und falls dieser Schwellenwert überschritten wird, kann dies als Anzeichen dafür gewertet werden, dass das Kraftfahrzeug 10 beispielsweise nicht nur auf einer äußeren Fahrspur der Straße der ermittelten Reiseroute ausgewichen oder auf einen Autobahnparkplatz ausgeschert ist, sondern die Reiseroute tatsächlich verlassen hat. Der Grad der Abweichung zwischen der tatsächlichen Fahrtroute und der bereitgestellten Reiseroute kann beispielsweise von der Distanz abhängen, und eine Zuordnung verschiedener Distanzwerte zu entsprechenden graduellen Abstufungen kann beispielsweise in der Navigationseinrichtung 12 vorgegeben sein, oder es kann beispielsweise einem festgestellten Fahrmanöver, wie beispielsweise einem Abbiegen von der Reiseroute, ein Zahlenwert als Grad der Abweichung vorgegeben sein. Je nachdem, ob die Navigationseinrichtung 12 ein Abbiegen auf einer Autobahnausfahrt oder ein Ausscheren auf einen Autobahnparkplatz feststellt (S5), kann dann der entsprechende Zahlenwert des Grades der Abweichung abgelesen werden.

Beispiel der Fig. 1 kann also durch das Abfahren von der Autobahn das Abweichkriterium erfüllt sein, und damit kann die Navigationseinrichtung 12 feststellen, dass das Kraftfahrzeug 10 die bereitgestellte Reiseroute verlassen hat (S4). Beispielsweise kann der Fahrer als Standardeinstellung in seiner Navigationseinrichtung 12, dem beispielhaften Navigationssystem, hinterlegt haben, dass er beispielsweise bei Feststellen der Aktion des Verlassens der Autobahn an einer Abfahrt mit Abweichung zur vorgeschlagenen Reiseroute mithilfe der Navigationseinrichtung 12 gerne eine Filiale einer vorbestimmten RestaurantKette anfahren möchte. Eine solche Einstellung kann er beispielsweise in einem Benutzerprofil der Navigationseinrichtung 12 hinterlegen. Eine entsprechende, vorgegebene Kategorie an Geoobjekten kann in diesem Beispiel beispielsweise sein: "Restaurants des Betreibers M".

Im Verfahrensschritt S6 werden dann beispielsweise die entsprechende Restaurants oder das entsprechende Restaurant ermittelt (S6), vorzugsweise in Abhängigkeit von einem Umkreis um die aktuelle Position des Kraftfahrzeugs 10, wobei der Umkreis beispielsweise in dem Benutzerprofil vorgegeben oder beispielsweise vor der Fahrt eingestellt wurde. Dabei kann in dem beschriebenen Beispiel der Fig. 1 das Vorgeben entsprechender Restaurants als Geoobjekt mit benutzerspezifischem Interesse ("Point of Interest") (S7) dadurch erfolgen, dass der Benutzer zum Beispiel vor der Fahrt dieses Auswahlkriterium einstellt oder zum Beispiel durch eine Bedienhandlung ein ermitteltes Geoobjekt im Umkreis von zum Beispiel zehn Kilometern auswählt.

Findet die Navigationseinrichtung 12, das beispielhafte Navigationssystem, beispielsweise eine Filiale des Restaurants des Betreibers M, kann diese angefahren werden. Hierzu wird zunächst, in Abhängigkeit von dem vorgegebenen Geoobjekt, die ermittelte Reiseroute in eine Alternativroute geändert (S8), wobei die Alternativroute weiterhin das gleiche Reiseziel hat, jedoch über den Standort des Restaurants als Zwischenziel der neuen Alternativroute führt.

Findet die Navigationseinrichtung 12 beispielsweise keine entsprechende Filiale, so kann optional vorgesehen sein, dass Alternativen vorgeschlagen werden, beispielsweise ein Restaurant des Betreibers B oder ein Restaurant des Betreibers K. Sind auch keine Alternativen auffindbar, kann beispielsweise über eine entsprechende Anzeige auf der Anzeigefläche 20, abgefragt werden, ob die Umkreissuche erweitert und/oder zurück auf die Autobahn gefahren werden soll. In Abhängigkeit von einer entsprechenden Benutzereingabe des Fahrers, also beispielsweise ein Berühren oder Antippen eines entsprechendes Anzeigefeldes oder einer Spracheingabe, kann dann das alternative Restaurant in der Alternativroute berücksichtigt oder das Kraftfahrzeug 10 direkt zurück auf die Autobahn geführt werden.

Als Umkreis kann dabei beispielsweise ein Umkreis von zehn Kilometern Entfernung oder maximal zehn Minuten zusätzliche Fahrzeit vorgegeben sein. Für den Fall, dass die Navigationseinrichtung 12 beispielsweise keine entsprechenden Geoobjekte in dem Umkreis finden sollte, kann beispielsweise vorgesehen sein, dass über die Ausgabeeinrichtung 18 abgefragt werden kann, ob der Benutzer beispielsweise den Radius des Umkreises erhöhen möchte.

In den meisten Fällen wird jedoch eine oben beschriebene Ausfahrt, also eine Abfahrt von der Autobahn, deswegen genommen, weil beispielsweise ein Autohof mit einem zugehörigen Restaurant beispielsweise angekündigt wurde. Das beschriebene Vorgehen bietet dahingehend eine Erleichterung, dass kein lästiges Zurückführen auf die Autobahn durch das beispielhafte Navigationssystem durchgeführt und damit die Suche nach dem Autohof erschwert wird, sondern direkt der Autohof bzw. die Restaurantfiliale neues Zwischenziel automatisch angesteuert werden kann.

Optional können zum Beispiel ein Fahrzeugführer und/oder ein weiterer Fahrzeuginsasse jeweils ein Benutzerprofil personenbezogen für die Navigationsregeln zum Beispiel in dem Speichermedium des Kraftfahrzeugs 10 oder in einem Speichermedium eines mobilen Endgeräts, beispielsweise eines Smartphones, hinterlegt haben. Das jeweilige Benutzerprofil kann im Kraftfahrzeug 10 zum Beispiel anhand einer kamerabasierten Personenerkennung zugeordnet und vollautomatisch umgesetzt werden. Hierzu kann das Kraftfahrzeug 10 beispielsweise eine Sensoreinrichtung mit zum Beispiel einer Kamera und einer Bildanalyse-Software aufweisen. Ist das Benutzerprofil beispielhaft auf dem mobilen (personenbezogenen) Endgerät hinterlegt, kann das Benutzerprofil in verschiedene Kraftfahrzeuge 10 mitgenommen werden und vollautomatisch berücksichtigt werden, zum Beispiel beim Car-Sharing. Beispielsweise kann immer berücksichtigt werden, dass bei einer Person notwendig ist oder dass es von der Person bevorzugt wird, dass zum Beispiel in bestimmten Abständen Toiletten angefahren werden. Dieses Profil kann zum Beispiel auf einem kraftfahrzeugexternen Server unabhängig von dem Kraftfahrzeug 10 und/oder unabhängig von dem mobilen Endgerät abgelegt sein und zum Beispiel nach einer Personenerkennung und/oder Personenzuordnung abgerufen werden.

Gemäß einer weiteren Ausführungsbeispiel kann eine vorgegebene Verknüpfung sein, dass wenn zum Beispiel eine Autobahnabfahrt entgegen der vom beispielhaften Navigationssystem vorgegebenen Fahrtroute genommen wird und beispielsweise ein Tankstand auf Reserve oder beispielsweise weniger als ¼ voll ist, dass dann eine nächstgelegene Tankstelle angefahren werden soll. Ein entsprechender Schwellenwert für einen Füllstand kann beispielsweise vom Benutzer des Kraftfahrzeugs 10, also beispielsweise vom Fahrzeugführer, vorgegeben werden, und dazu beispielsweise in dem Benutzerprofil gespeichert werden. Alternativ oder zusätzlich kann vorgegeben werden, dass bei dieser Aktion zum Beispiel immer die nächstgelegene Tankstelle unabhängig vom Tankfüllstand angefahren werden soll, also zum Beispiel bei jedem Verlassen der Autobahn. In dem Beispiel kann die Navigationseinrichtung 12 aus dem Kraftfahrzeugsystem 34 das Betriebssignal empfangen, das den beispielhaften Tankfüllstand beschreiben kann. Dieser Wert kann mit dem optional vorgegebenen Schwellenwert verglichen werden und, falls der Wert mit dem Schwellenwert übereinstimmt oder beschreibt, dass der Tankfüllstand beispielsweise geringer ist als der Schwellenwert, kann als Kategorie die Kategorie "Tankstellen" vorgegeben werden. Alternativ oder zusätzlich kann in abhängig kann von diesem Betriebsparameter zum Beispiel das Geoobjekt vorgegeben werden (S7), wobei das so vorgegebene Geoobjekt beispielsweise eine Tankstelle eines bestimmten Betreibers sein kann.

Um beispielsweise eine Spezifizierung von Tankstellen eines Betreibers A durchzuführen, kann für eine automatische Zwischenzielgenerierung beispielsweise auch so vorgegangen werden, dass vorgegeben werden kann, beispielsweise nur die Tankstellen des Betreibers A zum Tanken vorzusehen, und das auf einer Fahrroute zum vorgegebenen Reiseziel, also den Zielort, zum Beispiel entsprechend des Tankfüllstandes seitens der Navigationseinrichtung 12 geschaut oder ermittelt werden kann, dass mit möglichst wenig Zeit- und/oder Fahrkilometer-Aufwand und/oder entsprechend des absoluten Tankstandes und/oder des Zielorts und/oder einer Verkehrssituation, also beispielsweise durch möglichst wenig Zeitverlust oder Fahrkilometer, als Zwischenziel oder Zwischenziele Tankstellen des Betreibers A ermittelt werden (S6), also beispielsweise generiert werden. Dabei kann zum Beispiel eine Vorgabe gemacht werden, dass der Tankfüllstand nie unter einen bestimmten Wert fallen soll, beispielsweise die unter ¼ vollen Tank. Entsprechendes kann analog auch beispielsweise für das Aufladen einer Energiespeichereinrichtung von Elektrofahrzeugen vorgesehen sein.

Beispielsweise können hierzu schon vorab bei einem Losfahren am Startpunkt die besten Tankmöglichkeiten oder Auflademöglichkeiten vorab ermittelt werden und/oder es kann ermittelt werden, an welchen Zwischenhalten, also an welchen Zwischenzielen, es sinnvoll sein kann, das Kraftfahrzeug 10 aufzutanken oder aufzuladen.

Gemäß einem weiteren Ausführungsbeispiel kann berücksichtigt werden, dass, wenn/falls zum Beispiel eine Auswahl entgegen der vorgeschlagenen Reiseroute genommen wird, eine Verkehrssituation erfasst werden kann (S9), beispielsweise ein Stau und/oder eine Stau- oder Baustellenankündigung der ermittelten Reiseroute vorliegt, beispielsweise für die nächsten 50 Kilometer, und diese der Grund für die Abfahrt sein kann, obwohl zum Beispiel die schnellste Fahrt eventuell weiterhin auf der Autobahn wäre. Eine entsprechende Kilometerzahl kann optional von dem Fahrzeugführer vorher angegeben werden, beispielsweise vor Beginn der Reise oder als Standardeinstellung. Liegt eine entsprechende Meldung vor und/oder erfasst zum Beispiel ein Stausensor des Kraftfahrzeugs 10 einen Stau, kann dargestellt werden, dass ein optionales, neu generiertes Zwischenziel und/oder die Rückfahrt auf die Autobahn zum Beispiel eine Neuberechnung mit alternativer Route mit Umfahrung des beispielhaften Staus gemacht werden kann, obwohl die schnellste Route eventuell weiterhin die Autobahn wäre. Eine entsprechende Meldung kann beispielhaft durch die Navigationseinrichtung 12 aus einem kraftfahrzeugexternen Sender empfangen werden, beispielsweise von einem Verkehrsdienst. Beim Erfassen der Verkehrssituation (S9) wird vorzugsweise eine geographische Ausbreitung der Beeinträchtigung eines Verkehrsflusses auf der bereitgestellten Reiseroute miterfasst. Als Geoobjekt kann dabei eine Zusammenführung der bereitgestellten Reiseroute mit einer befahrbaren Infrastruktur ermittelt werden (S6), also beispielsweise eine vorausliegende Autobahnauffahrt oder beispielsweise eine Kreuzung einer Landstraße, auf die das Kraftfahrzeug 10 ausgewichen ist, mit einer Bundesstraße, auf der die zuerst ermittelte Reiseroute entlang führt. Eine Staulänge kann beispielsweise anhand des Verkehrssignals ermittelt werden, das von dem Verkehrsdienst bereitgestellt werden kann. Diese Information kann beim Ändern in die Alternativroute (S8) berücksichtigt werden.

Gemäß einem weiteren Ausführungsbeispiel können optional bei einem festgestellten Verlassen der Route zum Beispiel Informationen des Umfeldes des Kraftfahrzeugs 10 durch die Ausgabeeinrichtung 18 ausgegeben werden, die nicht vor der Fahrt von dem Benutzer des Kraftfahrzeugs 10 voreingestellt wurden, also beispielsweise über die Bedieneinrichtung 26 eingegeben wurden. Über beispielsweise einen Dialog auf dem beispielhaften Bildschirm kann zum Beispiel ein Vorschlag für ein Zwischenstopp zum Beispiel zum Essen, Tanken, oder eine andere Kategorie unterbreitet werden und eine Auswahl kann erfragt werden. Beispielsweise kann auf der Anzeigefläche 20 ein Anzeigefeld 22 mit einem Piktogramm für die Kategorie Essen einem weiteren Anzeigefeld 22 mit zum Beispiel einem Piktogramm für die Kategorie Tanken ausgegeben werden (S10). Die Anzeigefelder 22 können dabei beispielsweise für diejenigen Geoobjekte im Umkreis des Kraftfahrzeugs 10 stehen, die bei Verlassen der bereitgestellten Reiseroute ermittelt wurden (S6). Eine jeweilige Kategorie an Geoobjekten, also eine Zuordnung der Geoobjekte in Kategorien, kann beispielsweise digital in der Navigationseinrichtung 12 hinterlegt sein. Die Navigationseinrichtung 12 kann dann ein Informationsausgabesignal für jedes der ermittelten Geoobjekte und/oder für jede der Kategorien erzeugen (S11), und dieses Informationsausgabesignal, das beispielsweise eines der Piktogramme beschreiben kann, kann dann im Verfahrensschritt S12 an die Ausgabeeinrichtung 18 übertragen und durch die Ausgabeeinrichtung 18 ausgegeben werden. Durch eine Bedienhandlung, beispielsweise durch ein Antippen des entsprechenden Anzeigefeldes 22 oder durch eine Spracheingabe, kann der Benutzer das gewünschte Geoobjekt und/oder die gewünschte Kategorie auswählen, und die Bedieneinrichtung 26 kann in Abhängigkeit von der empfangenen Bedienhandlung ein Bediensignal erzeugen, das die Bedienhandlung und/oder die Auswahl beschreiben kann, und deswegen auch als Auswahlsignal bezeichnet werden kann. Im Verfahrensschritt S13 kann die Navigationseinrichtung 12 das Auswahlsignal empfangen, das beispielsweise eine Auswahl der Kategorie "Tanken" beschreiben kann. Anhand dieses Auswahlsignals kann dann die ermittelte Tankstelle als Zwischenziel vorgegeben werden (S7).

Gemäß einem weiteren Ausführungsbeispiel kann zur Generierung von Zwischenzielen zu dem Reiseziel zum Beispiel von dem Startpunkt und/oder von einer aktuellen Position des Kraftfahrzeugs 10 vorgegeben werden, dass beispielsweise nur Raststätten oder Autohöfe oder Ausfahrten vorgesehen werden sollen, bei denen zum Beispiel nur eine bestimmte Tankstellenkette und/oder ein bestimmtes Restaurant vorgesehen sein kann. Beispielsweise kann ein maximaler Umkreis definiert werden, beispielsweise ein Umkreis von fünf Kilometern und/oder fünf Minuten Fahrzeit mit Zwischenzielen, bei denen beispielsweise eine Kombination einer Tankstelle des Betreibers A und eines Restaurants des Betreibers M Kombination vorhanden sein soll.

Gemäß einem weiteren Ausführungsbeispiel kann die Zwischenzielgenerierung optional mit einer Verkehrszeichenerkennung verbunden sein. Wird beispielsweise unmittelbar vor einer Abfahrt zum Beispiel durch das Verkehrszeichen 32 und ein Symbol 30 zum Beispiel eine Gaststätte oder eine Sehenswürdigkeit angekündigt, kann dieses Verkehrszeichen 32 durch dem Fachmann aus dem Stand der Technik bekannten Verfahren zur Verkehrszeichenerkennung erkannt werden. Hierzu kann beispielhaft die Sensoreinrichtung 28 mit der beispielhaften Kamerasensor das Verkehrszeichen 32 erfassen (S14). Alternativ kann beispielsweise anhand von in der Navigationseinrichtung 12 gespeicherten Kartenmaterial eine entsprechende Informationen zu Verkehrszeichen ausgelesen werden. Die beispielhafte Sehenswürdigkeit oder die beispielhafte Gaststätte kann dann angefahren werden, zum Beispiel wenn oder falls der Benutzer des Kraftfahrzeugs 10 dies so in den beispielhafte Navigationssystem also Vorgabe hinterlegt hat, eine solche Abfahrt entgegengesetzt der Routenvorgabe zu wählen.

Alternativ oder zusätzlich kann das Geoobjekt auch zum Beispiel eine Toilette und/oder eine Tankstelle (zum Beispiel eine bestimmte Tankstellenkette) und/oder beliebig andere Restaurantketten und/oder eine Sehenswürdigkeit und/oder ein anderes Sonderziel sein.

Eine Verknüpfung zur automatischen Generierung von Zwischenzielen kann alternativ oder zusätzlich mit diesen beispielhaften Zwischenzielen erfolgen.

Die oben beschriebenen Einstellungen können optional in einem eigenen, persönlichen Profil für Navigationssystemeinstellungen hinterlegt sein, die als Vorgaben von einem Kraftfahrzeug 10 zum nächsten Kraftfahrzeug für das Navigationssystem mitgenommen werden können. Dieses Profil kann zum Beispiel auf einem vom Kraftfahrzeug 10 unabhängigen Server hinterlegt und abrufbar sein, falls oder wenn die Person zum Beispiel als Fahrzeugführer eindeutig im Kraftfahrzeug 10 erkannt und ein Profil zugeordnet werden kann.

Ein einzelner Benutzer kann beispielsweise unterschiedliche eigene Profile für verschiedene Fahrszenarien vorbereiten, die vor einer Fahrt aktiviert werden können. Beispielsweise können in das beispielhafte Navigationssystem bereits besondere Fahrszenarien vorgeschlagen werden, die gegebenenfalls mit eigenen Profilen kombiniert werden können.

Ein mögliches Profil kann beispielsweise eine "möglichst schnelle Toilettensuche" sein, wobei beispielsweise bei Abfahrten entgegen der vorgeschlagenen Route zum Beispiel mit hoher Priorität ein Zwischenziel mit möglichst schnellem Zugriff auf eine Toilette genannt werden kann. Bei einer Fahrt mit einem angegebenen Reiseziel können beispielsweise auf dem Weg dorthin kostenfreie und/oder kostenpflichtige Toiletten als Zwischenziele generiert werden, zwischen denen eine maximale Fahrzeit, die optional vorgegeben werden kann, von Toilette zu Toilette nicht überschritten werden soll.

Ein weiteres beispielhaftes Profil kann eine "Fahrt mit Kindern" sein, wobei beispielsweise bei Abfahrten entgegen der vorgeschlagenen Route favorisiert auswählbare Restaurants, zum Beispiel Filialen eines Fastfood-Restaurants, bei den Zwischenzielen vorgesehen sein können. Bei zum Beispiel einer Fahrt mit Angabe eines Reiseziels kann beispielsweise vorgeschlagen werden, an welchen Filialen ein Zwischenhalt gemacht werden kann, um bei diesem Zwischenzielen auch gleich zum Beispiel bei auswählbaren Tankstellenketten (beispielsweise des Betreibers A) zu tanken. Beispielsweise können Zeitfenster oder ein Zeitfenster vorgegeben werden, in dem ein Zwischenhalt bei einer Filiale stattfinden soll. Es kann berücksichtigt werden, dass ein vorgegebener Tankfüllstand und/oder der Zustand bei Elektrofahrzeugen während der Fahrt nicht unterschritten wird.

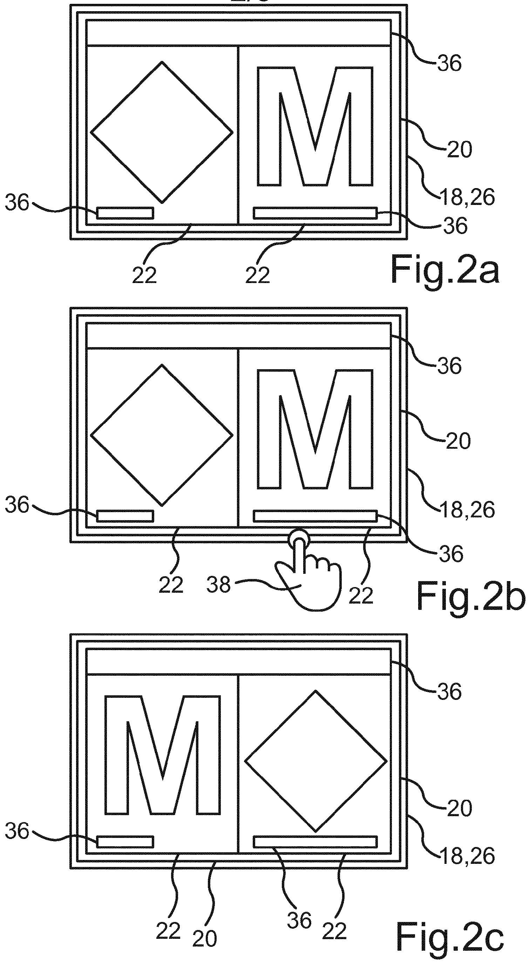

In einem weiteren beispielhaften Profil "Freizeit-/Informationsfahrt mit Sehenswürdigkeiten" können beispielhaft nach einer Abfahrt entgegen der vorgeschlagenen Reiseroute der Navigationseinrichtung 12 Sehenswürdigkeiten mit hoher Priorität als Zwischenziel vorgeschlagen werden. Bei einer Angabe eines Reiseziels können der Reiseroute Sehenswürdigkeiten als Zwischenziele vorgeschlagen werden, die gegebenenfalls verworfen werden können (vergleiche Fig. 2A-2C). Beispielsweise kann von dem Kraftfahrzeughersteller angeboten werden, zu den Sehenswürdigkeiten Hörtexte und/oder Filme anzubieten. Es kann zum Beispiel eine spezielle Sightseeingtour für Kinder vorgeschlagen werden, mit speziell für Kinder vorbereiteten Hörtexten und/oder Filmen.

Ist gemäß einem weiteren Ausführungsbeispiel beispielsweise nur ein automatisch generiertes Zwischenziel, also nur ein ermitteltes Geoobjekt, nach einer Ausfahrt vorhanden, beispielsweise ein Restaurant, kann dies angefahren werden. Ist beispielsweise der aktuelle Tankfüllstand zum Beispiel gleichzeitig auch unterhalb eines vorgegebenen Tankstandes, kann eine Antwort nicht eindeutig sein, d.h. es kann nicht eindeutig sein, welches der Geoobjekte vorgegeben werden soll. In diesem Fall können beispielsweise beide Zwischenziele angefahren werden, d.h. die Alternativroute kann beide Geoobjekte als Zwischenziele berücksichtigen. Die Fig. 2A zeigt beispielhaft eine Ausgabeeinrichtung 18, mit dem beispielhaften berührungssensitiven Bildschirm. In dem genannten Fall kann beispielsweise ein erstes Anzeigefeld 22 mit einem Bild eines Logos der Tankstelle (in der Fig. 2A das linke Anzeigefeld 22) angezeigt werden (S10), und es kann optional zum Beispiel ein Textfeld 36 angezeigt werden (S10), in dem Beispiel der Text "in 2 km" darauf hinweisen kann, die beispielhafte Tankstelle noch zwei Kilometer entfernt ist. Das in der Fig. 2A beispielhaft rechts dargestellte Anzeigefeld 22 kann beispielsweise ein Logo des Restaurants oder der Restaurantkette anzeigen, und ein optionales Textfeld 36 mit zum Beispiel dem Hinweis, dass das Restaurant "danach in 800 m" erreicht wird, also ein weiteres Textfeld 36 mit einer Angabe zu einer Entfernung zu dem Geoobjekt. Die Ausgabeeinrichtung 18 der Fig. 2A veranschaulicht so eine Anzeige dahingehend, dass zuerst die Tankstelle und danach das Restaurant angefahren wird. Zur Orientierung kann beispielsweise über den beiden Anzeigefeldern 22 ein zusätzliches, optionales Textfeld 36 angezeigt werden (S10), in dem, zur Orientierung des Benutzers, beispielsweise der Text "nächste Zwischenziele" angezeigt werden kann.

Die Fig. 2B zeigte die Ausgabeeinrichtung 18 der Fig. 2A, und beispielshaft eine Hand 38 des Benutzers des Kraftfahrzeugs 10, wobei der Benutzer beispielhaft mit dem Finger den beispielhaften berührungssensitiven Bildschirm auf dem rechten Anzeigefeld 22 berühren kann. Beispielsweise durch eine schnelle Doppel-Berührung des Anzeigefelds 22 mit dem Logo der Restaurantkette kann das rechte, also das berührte Anzeigefeld 22 beispielsweise grau hinterlegt werden, um dem Benutzer anzuzeigen, dass dieses Zwischenziel nicht mehr angefahren wird. Mit anderen Worten hat der Benutzer im Beispiel der Fig. 2B das Zwischenzielen der Restaurantkette verworfen. Die Navigationseinrichtung 12 berücksichtigt dann dieses verworfene Geoobjekt bei dem Vorgang des Änderns der Reiseroute (S7) nicht mehr.

Im Beispiel der Fig. 2C kann beispielsweise durch eine Berührung und/oder durch Verschieben eines der beiden Anzeigefelder 22 auf dem beispielhaften berührungssensitiven Bildschirm ("Touch-Display") das Symbol der Tankstelle nach rechts und/oder das Symbol der Restaurantkette nach links verschoben werden, um die Reihenfolge der anzufahrenden Zwischenziele zu verändern, also zum Beispiel zuerst das Restaurant und danach die Tankstelle anzufahren. Die Bedieneinrichtung 26 kann in Abhängigkeit von dieser Bedienhandlung ein entsprechendes Bediensignal erzeugen und an die Navigationseinrichtung 12 übertragen. In Abhängigkeit von dem Bediensignal, das auch als Auswahlsignal bezeichnet werden kann, kann dann die ermittelte Reiseroute geändert in die Alternativroute (S7) werden.

Insgesamt zeigen die Fig. 2A, Fig. 2B, und Fig. 2C jeweils eine Anzeige eines beispielhaften Fahrzeug-Displays bei zwei möglichen neuen Zwischenzielen, beispielsweise einer Tankstelle eines vorbestimmten Betreibers und einem Restaurant eines vorbestimmten Betreibers. Mit anderen Worten wird ein Eingreifen in die Reihenfolge der Zwischenziele durch den Benutzer des Kraftfahrzeugs 10, einem beispielhaften Fahrzeugführer, veranschaulicht.

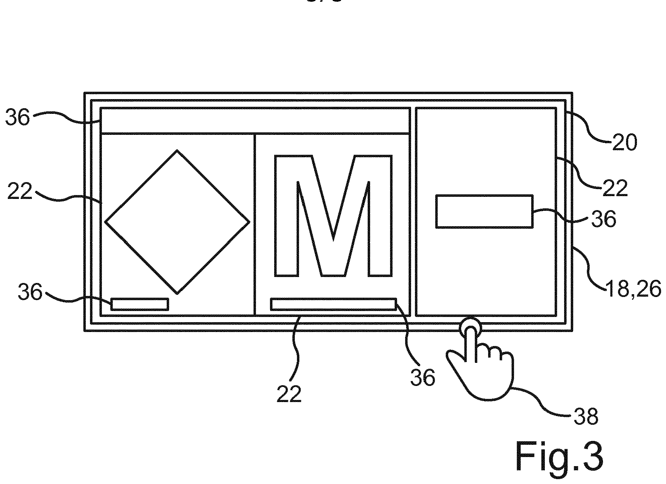

Gemäß einem weiteren Ausführungsbeispiel kann der Benutzer ein Zwischenziel verwerfen. Ein Anfahren der generierten Zwischenziele, also ein Anfahren der vorgegebenen Geoobjekte, kann optional jederzeit unterbrochen werden, beispielsweise falls oder wenn durch zum Beispiel eine Berührung auf dem beispielhaften Display zum Beispiel eines dritten Anzeigefeldes 22 eine entsprechende Funktion zum Verwerfen eines Zwischenziels aktiviert wird (Fig. 3). Das Textfeld 36 des weiteren Anzeigefeldes 22, das in der Fig. 3 als grau hinterlegte Fläche gezeigt ist, kann beispielsweise den Text "Doch zurück auf die Autobahn/vorgesehene Route" zeigen. Zusätzlich oder alternativ kann vorneherein eine Priorität vorgegeben werden, d.h. eine Reihenfolge, mit der die Zwischenziele angefahren werden sollen, wenn/falls sie gemeinsam generiert werden.

Die Fig. 3 zeigt eine beispielhafte Anzeige auf dem beispielhaften Fahrzeug-Display, bei zwei möglichen neuen Zwischenzielen, beispielsweise einer Tankstelle und einem Restaurant jeweils eines bestimmten Betreibers. Ein Anfahren der generierten Zwischenziele kann dabei zum Beispiel jederzeit unterbrochen werden, wenn beispielhaft durch eine Berührung des Anzeigefeldes 22 mit dem beispielhaften Text "Doch zurück auf die Autobahn" eine entsprechende Funktion aktiviert wird.

Insgesamt zeigen die Ausführungsbeispiele ein Verfahren zum Unterstützen eines Benutzers eines Kraftfahrzeugs 10 bei einer Fahrt mit dem Kraftfahrzeug 10 und eine Navigationseinrichtung 12, beispielsweise ein Fahrzeug-Navigationssystem, mit automatischer Generierung von Zwischenzielen. Dabei kann durch eine praktische durchgeführte Aktion durch den Benutzer des Kraftfahrzeugs 10, beispielsweise durch den Fahrzeugführer, bei einem Ändern der Fahrtroute gegenüber der vorgeschlagenen Fahrtroute des beispielhaften Navigationssystems, bei bestimmten Voraussetzungen, vorzugsweise nur bei Verlassen einer Autobahn, das beispielhafte Navigationssystem automatisch ein neues Zwischenziel vorzugsweise in der Nähe der momentanen Fahrzeugposition erzeugen kann.

### Bezugszeichenliste

- 10: Kraftfahrzeug
- 12: Navigationseinrichtung
- 14: Speichereinrichtung
- 16: Prozessoreinrichtung
- 18: Ausgabeeinrichtung
- 20: Anzeigefläche
- 22: Anzeigefeld
- 24: Datenkommunikationsverbindung
- 26: Bedieneinrichtung
- 28: Sensoreinrichtung
- 30: Symbol
- 32: Verkehrszeichen
- 34: Kraftfahrzeugsystem
- 36: Textfeld
- 38: Hand
- S1-S14: Verfahrensschritte

## Patentansprüche

1. Verfahren zum Unterstützen eines Benutzers eines Kraftfahrzeugs (10) bei einer Fahrt mit dem Kraftfahrzeug (10), aufweisend die durch eine Navigationseinrichtung (12) durchgeführten Schritte:
- Bereitstellen einer Reiseroute, die eine Reise von einem Startpunkt zu einem Reiseziel beschreibt (S1),
- Feststellen einer tatsächlich durch das Kraftfahrzeug (10) befahrenen Fahrtroute (S2),
**gekennzeichnet durch** die durch die Navigationseinrichtung (12) durchgeführten Schritte:
- Vergleichen der festgestellten, tatsächlichen Fahrtroute mit der bereitgestellten Reiseroute (S3),
- falls der Vergleich (S3) ergibt, dass die tatsächlichen, durch das Kraftfahrzeug (10) befahrene Fahrtroute ein Abweichkriterium erfüllt: Feststellen, dass das Kraftfahrzeug (10) die bereitgestellte Reiseroute verlassen hat (S4),
- Vorgeben einer Kategorie in Abhängigkeit von einem durch eine Sensoreinrichtung (28) des Kraftfahrzeugs (10) erfassten Verkehrszeichen (32),
- in Abhängigkeit von dem festgestellten Verlassen der bereitgestellten Reiseroute: Ermitteln mindestens eines punkthaften Geoobjekts der vorgegebenen Kategorie an Geoobjekten (S6),
- Vorgeben des ermittelten Geoobjekts als Geoobjekt mit einem benutzerspezifischen Interesse (S7), und
- in Abhängigkeit von dem vorgegebenen Geoobjekt: Ändern der ermittelten Reiseroute in eine Alternativroute zu dem Reiseziel mit dem vorgegebenen Geoobjekt als Zwischenziel (S8).

2. Verfahren nach Anspruch 1, **dadurch gekennzeichnet, dass**
das Abweichkriterium beschreibt:
- ein Überschreiten eines vorgegebenen Schwellenwerts eines Grads einer Abweichung zwischen der tatsächlichen Fahrtroute und der bereitgestellten Reiseroute; und/oder
- ein Feststellen eines durch das Kraftfahrzeug (10) aktuell durchgeführten Fahrmanövers, vorzugsweise ein außerplanmäßiges Abbiegemanöver und/oder ein Verlassen einer Autobahn und/oder ein Feststellen, dass sich das Kraftfahrzeug auf einer Straßenausfahrt abseits der ermittelten Reiseroute befindet (S5).

3. Verfahren nach einem der vorhergehenden Ansprüche, **dadurch gekennzeichnet, dass**
das Vorgeben des Geoobjekts als Geoobjekt mit einem benutzerspezifischen Interesse (S7) erfolgt in Abhängigkeit von:
- einem Standort des ermittelten Geoobjekts in einem vorbestimmten Umkreis um eine aktuelle Position des Kraftfahrzeugs (10); und/oder
- einem Bediensignal aus einer Bedieneinrichtung (26), wobei das Bediensignal eine benutzerspezifische Auswahl des ermittelten Geoobjekts beschreibt; und/oder
- dem durch eine Sensoreinrichtung (28) des Kraftfahrzeugs (10) und/oder durch die Navigationseinrichtung (12) erfassten Verkehrszeichen (32, S14); und/oder
- einer in einem Benutzerprofil hinterlegten benutzerspezifischen Präferenz.

4. Verfahren nach einem der vorhergehenden Ansprüche, **dadurch gekennzeichnet,**
**dass** das Vorgeben der Kategorie zusätzlich erfolgt in Abhängigkeit von:
- von einem aus einem Kraftfahrzeugsystem des Kraftfahrzeugs (10) empfangenen Wert eines Betriebsparameters des Kraftfahrzeugsystems (34); und/oder
- einem aktuellen Tankfüllstand oder einem aus einer Zeitmesseinrichtung empfangenen Zeitsignal, das vorzugsweise einen Zeitpunkt oder einen Zeitbereich beschreibt; und/oder
- der in dem Benutzerprofil hinterlegten benutzerspezifischen Präferenz.

5. Verfahren nach einem der vorhergehenden Ansprüche, **gekennzeichnet durch** die folgenden, durch die Navigationseinrichtung (12) durchgeführten Schritte:
- in Abhängigkeit von dem festgestellten Verlassen der bereitgestellten Reiseroute: Ermitteln eines weiteren, punkthaften Geoobjekts einer anderen als der vorgegebenen Kategorie an Geoobjekten (S6),
- Erzeugen jeweils eines Informationsausgabesignals für jedes der ermittelten Geoobjekte und/oder für jede der Kategorien (S11),
- Übertragen des jeweiligen Informationsausgabesignals an eine Ausgabeeinrichtung (18) des Kraftfahrzeugs (10, S12) zum Ausgeben des jeweiligen Informationsausgabesignals (S10), und
- Empfangen eines Auswahlsignals aus der Bedieneinrichtung (26), wobei das Auswahlsignal eine benutzerspezifische Auswahl eines der ermittelten Geoobjekte und/oder einer der Kategorien beschreibt (S13),
wobei das Vorgeben des Geoobjekts als Geoobjekt mit dem benutzerspezifischen Interesse (S7) erfolgt in Abhängigkeit von der durch das Auswahlsignal beschriebenen Auswahl.

6. Verfahren nach einem der vorhergehenden Ansprüche, **gekennzeichnet durch** den durch die Navigationseinrichtung durchgeführten Schritt:
- in Abhängigkeit von dem festgestellten Verlassen der bereitgestellten Reiseroute: Erfassen einer Verkehrssituation mit einer geographischen Ausbreitung einer Beeinträchtigung eines Verkehrsflusses auf der bereitgestellten Reiseroute (S9),
wobei das ermittelte Geoobjekt eine Zusammenführung der bereitgestellten Reiseroute mit einer befahrbaren Infrastruktur ist, und wobei die Alternativroute über die befahrbare Infrastruktur und an einer Stelle der Zusammenführung zurück auf die bereitgestellte Reiseroute führt, und wobei das Ändern der bereitgestellten Reiseroute in die Alternativroute (S8) in Abhängigkeit von der festgestellten geographischen Ausbreitung erfolgt.

7. Verfahren nach einem der vorhergehenden Ansprüche, **gekennzeichnet durch** den folgenden, durch die Navigationseinrichtung (12) durchgeführten Schritt:
- Empfangen eines Auswahlsignals aus der Bedieneinrichtung (26), wobei das Auswahlsignal eine Reihenfolge mehrerer vorgegebener Geoobjekte und/oder ein Verwerfen eines vorgegebenen Geoobjekts als mögliches Reiseziel beschreibt,
wobei das Ändern der ermittelten Reiseroute in die Alternativroute (S8) in Abhängigkeit von dem empfangenen Auswahlsignal erfolgt.

8. Navigationseinrichtung (12), aufweisend eine Prozessoreinrichtung (16), wobei die Prozessoreinrichtung (16) dazu eingerichtet ist, bei Ausführen eines in einem Speichermedium (14) gespeicherten Programmcodes ein Verfahren nach einem der vorhergehenden Ansprüche durchzuführen.

9. Kraftfahrzeug (10), **gekennzeichnet durch** eine Navigationseinrichtung (12) nach Anspruch 8.

## Claims

1. Method for assisting a user of a motor vehicle (10) when driving the motor vehicle (10), comprising the steps carried out by a navigation device (12):
- providing a travel route describing a journey from a starting point to a destination (S1);
- determining a driving route (S2) actually driven by the motor vehicle (10),
**characterized by** the steps carried out by the navigation device (12):
- comparing the determined actual driving route to the provided travel route (S3);
- if the comparison (S3) shows that the actual driving route driven by the motor vehicle (10) meets a deviation criterion: establishing that the motor vehicle (10) has departed from the provided travel route (S4);
- prespecifying a category as a function of a traffic sign (32) detected by a sensor device (28) of the motor vehicle (10);
- as a function of the determined departure from the provided travel route: determining at least one punctiform geo-object of the predefined category of geo-objects (S6);
- predefining the determined geo-object as a geo-object having a user-specific interest (S7); and
- as a function of the predefined geo-object: changing the determined travel route to an alternative route to the destination, with the predefined geo-object serving as an intermediate destination (S8).

2. Method according to Claim 1, **characterized in that**
the deviation criterion describes:
- exceeding a predefined threshold value of a degree of a deviation between the actual driving route and the provided travel route; and/or
- detecting a driving maneuver that is currently being carried out by the motor vehicle (10), preferably an unscheduled turning maneuver and/or an exiting of a freeway, and/or determining that the motor vehicle is located on a highway exit away from the ascertained travel route (S5).

3. Method according to any one of the preceding claims, **characterized in that** the geo-object is predefined as a geo-object having a user-specific interest (S7) as a function of:
- a location of the determined geo-object within a predefined perimeter around a current position of the motor vehicle (10); and/or
- an operating signal from an operating device (26), wherein the operating signal describes a user-specific selection of the determined geo-object; and/or
- the traffic sign (32, S14) detected by a sensor device (28) of the motor vehicle (10) and/or by the navigation device (12); and/or
- a user-specific preference stored in a user profile.

4. Method according to any one of the preceding claims, **characterized in that** the category is additionally predefined as a function of:
- a value of an operating parameter of the motor vehicle system (34) received from a motor vehicle system of the motor vehicle (10); and/or
- a current tank fill level or a time signal received from a time-measuring device, which preferably describes a point in time or a time range; and/or
- the user-specific preference stored in the user profile.

5. Method according to any one of the preceding claims, **characterized in that** the following steps are carried out by the navigation device (12):
- as a function of the determined departure from the provided travel route: determining a further, punctiform geo-object of a different category to the predefined category of geo-objects (S6);
- generating in each case an information output signal for each of the determined geo-objects and/or for each of the categories (S11);
- transmitting the respective information output signal to an output device (18) of the motor vehicle (10, S12) for outputting the respective information output signal (S10); and
- receiving a selection signal from the operating device (26), wherein the selection signal describes a user-specific selection of one of the determined geo-objects and/or one of the categories (S13),
wherein the geo-object is predefined as a geo-object having the user-specific interest (S7) as a function of the selection described by the selection signal.

6. Method according to any one of the preceding claims, **characterized by** the step carried out by the navigation device:
- as a function of the determined departure from the provided travel route:
detecting a traffic situation having a geographical expansion of an impairment of a traffic flow on the provided travel route (S9),
wherein the determined geo-object is a confluence of the provided travel route with a drivable infrastructure, and wherein the alternative route leads over the drivable infrastructure and, at a point of the confluence, back onto the provided travel route, and wherein the provided travel route is changed to the alternative route (S8) as a function of the established geographic expansion.

7. Method according to any one of the preceding claims, **characterized by** the following step carried out by the navigation device (12):
- receiving a selection signal from the operating device (26), wherein the selection signal describes a sequence of a plurality of predefined geo-objects and/or a rejection of a predefined geo-object as a possible destination,
wherein the determined travel route is changed to the alternative route (S8) as a function of the received selection signal.

8. Navigation device (12) comprising a processor device (16), wherein the processor device (16) is designed to carry out a method according to any one of the preceding claims when program code stored in a storage medium (14) is executed.

9. A motor vehicle (10), **characterized by** a navigation device (12) according to Claim 8.

## Revendications

1. Procédé pour assister un utilisateur d'un véhicule automobile (10) lors d'un trajet avec le véhicule automobile (10), présentant les étapes exécutées par un dispositif de navigation (12) :
- mise à disposition d'un itinéraire, qui décrit un voyage d'un point initial à un but de voyage (S1),
- identification d'un trajet (S2) effectivement emprunté par le véhicule automobile (10),
**caractérisé par** les étapes exécutées par le dispositif de navigation (12) :
- comparaison du trajet effectif identifié à l'itinéraire mis à disposition (S3),
- si la comparaison (S3) montre que le trajet effectivement emprunté par le véhicule automobile (10) satisfait à un critère de divergence : identification du fait que le véhicule automobile (10) est sorti de l'itinéraire mis à disposition (S4),
- spécification d'une catégorie en fonction d'un panneau de signalisation (32) détecté par un dispositif capteur (28) du véhicule automobile (10),
- en fonction de la sortie identifiée de l'itinéraire mis à disposition :
détermination d'un objet géographique ponctuel de la catégorie spécifiée d'objets géographiques (S6),
- spécification de l'objet géographique déterminé comme objet géographique présentant un intérêt spécifique à l'utilisateur (S7) et
- en fonction de l'objet géographique spécifié : modification de l'itinéraire déterminé en un trajet alternatif vers le but du voyage comprenant l'objet géographique spécifié comme un but intermédiaire (S8).

2. Procédé selon la revendication 1, **caractérisé en ce que** le critère de divergence décrit :
- un dépassement d'une valeur seuil spécifiée d'un degré d'une divergence entre le trajet effectif et l'itinéraire mis à disposition ; et/ou
- une identification d'une manœuvre de conduite actuellement exécutée par le véhicule automobile (10), de préférence une manœuvre de virage non programmé et/ou une sortie d'une autoroute et/ou une identification du fait que le véhicule automobile se trouve sur une sortie de route hors de l'itinéraire déterminé (S5).

3. Procédé selon l'une quelconque des revendications précédentes, **caractérisé en ce que** la spécification de l'objet géographique comme objet géographique présentant un intérêt spécifique à l'utilisateur (S7) s'effectue en fonction de :
- un site de l'objet géographique déterminé dans un rayon prédéfini autour d'une position actuelle du véhicule automobile (10) ; et/ou
- un signal de commande provenant d'un dispositif de commande (26), le signal de commande décrivant une sélection spécifique à l'utilisateur de l'objet géographique déterminé ; et/ou
- le panneau de signalisation (32, S14) détecté par un dispositif capteur (28) du véhicule automobile (10) et/ou par le dispositif de navigation (12) ; et/ou
- une préférence spécifique à l'utilisateur enregistrée dans un profil d'utilisateur.

4. Procédé selon l'une quelconque des revendications précédentes, **caractérisé en ce que** la spécification de la catégorie s'effectue en outre en fonction de :
- une valeur d'un paramètre de fonctionnement du système (34) du véhicule automobile reçue à partir d'un système du véhicule automobile (10) ; et/ou
- un niveau de carburant actuel ou un signal temporel reçu d'un dispositif de mesure du temps qui décrit de préférence un moment ou une plage temporelle ; et/ou
- la préférence spécifique à l'utilisateur enregistrée dans le profil d'utilisateur.

5. Procédé selon l'une quelconque des revendications précédentes, **caractérisé par** les étapes suivantes, exécutées par le dispositif de navigation (12) :
- en fonction de la sortie identifiée de l'itinéraire mis à disposition :
détermination d'un autre objet géographique ponctuel d'une autre catégorie que la catégorie spécifiée d'objets géographiques (S6),
- génération d'un signal de sortie d'information respectif pour chacun des objets géographiques déterminés et/ou pour chacune des catégories (S11),
- transmission du signal de sortie d'information respectif à un dispositif de sortie (18) du véhicule automobile (10, S12) pour émettre le signal de sortie d'information (S10) respectif et
- réception d'un signal de sélection provenant du dispositif de commande (26), le signal de sélection décrivant une sélection spécifique à l'utilisateur d'un des objets géographiques déterminés et/ou d'une des catégories (S13),
la spécification de l'objet géographique comme objet géographique présentant un intérêt spécifique à l'utilisateur (S7) s'effectuant en fonction de la sélection décrite par le signal de sélection.

6. Procédé selon l'une quelconque des revendications précédentes, **caractérisé par** l'étape exécutée par le dispositif de navigation :
- en fonction de la sortie identifiée de l'itinéraire mis à disposition :
détection d'une situation de circulation présentant une dispersion géographique d'une compromission d'un flux de circulation sur l'itinéraire mis à disposition (S9),
l'objet géographique déterminé étant un regroupement de l'itinéraire mis à disposition et d'une infrastructure empruntable et la route alternative menant à travers l'infrastructure praticable et en un endroit du regroupement de retour à l'itinéraire mis à disposition et la modification de l'itinéraire mis à disposition en la route alternative (S8) s'effectuant en fonction de la dispersion géographique identifiée.

7. Procédé selon l'une quelconque des revendications précédentes, **caractérisé par l**'étape suivante, exécutée par le dispositif de navigation (12) :
- réception d'un signal de sélection provenant du dispositif de commande (26), le signal de sélection décrivant une séquence de plusieurs objets géographiques spécifiés et/ou un rejet d'un objet géographique spécifié comme but de voyage possible,
la modification de l'itinéraire déterminé en la route alternative (S8) s'effectuant en fonction du signal de sélection reçu.

8. Dispositif de navigation (12), présentant un dispositif de processeur (16), le dispositif de processeur (16) étant conçu pour exécuter, lors de l'exécution d'un code de programme enregistré dans un support d'enregistrement (14), un procédé selon l'une quelconque des revendications précédentes.

9. Véhicule automobile (10) **caractérisé par** un dispositif de navigation (12) selon la revendication 8.
